# EUROPEAN PATENT APPLICATION

(11) **EP 4 650 940 A1**
(43) Date of publication of application: **19.11.2025**
(21) Application number: 23915381.0
(22) Date of filing: 13.01.2023
(51) Int. Cl.: G06F 8/30

(54) **TRANSLATOR GENERATION METHOD AND APPARATUS, AND DEVICE AND STORAGE MEDIUM**

(71) Applicant: Shenzhen Yinwang Intelligent Technologies Co., Ltd., Shenzhen, Guangdong 518110 (CN)
(72) Inventor: SONG, Pengfei, Shenzhen, Guangdong 518129 (CN)
(74) Representative: Pfenning, Meinig & Partner mbB
(86) International application number: PCT/CN2023/072163
(87) International publication number: WO 2024/148612

(57) **Abstract**

This application provides a translator generation method, apparatus, and device, and a storage medium. The method relates to the translator field. The method includes: obtaining a description file, where the description file defines a keyword in a first DSL and N translator generation rules, N is greater than or equal to 1, the description file is obtained through configuration, a first rule in the N rules includes a plurality of target character strings and at least one wildcard, and the first rule is any one of the N rules; and generating, based on the description file, a configuration file and a translator corresponding to the first DSL, where the configuration file includes the N rules. The translator generated by using the method described in this application is highly applicable, and can meet different requirements of a user.

## Description

### TECHNICAL FIELD

This application relates to the translator field, and in particular, to a translator generation method, apparatus, and device, and a storage medium.

### BACKGROUND

A translator is a tool for translating a computer language into another computer language. Common translators include compilers, assemblers, interpreters, and the like.

Currently, a common translator generation method is complex, and a generated translator cannot meet a use requirement of a user. Therefore, a new translator urgently needs to be developed.

### SUMMARY

This application provides a translator generation method, apparatus, and device, and a storage medium. The translator generation method is simple. A translator generated in the method in this application is highly applicable, and can meet different requirements of a user.

According to a first aspect, this application provides a translator generation method, including: obtaining a description file, where the description file defines a keyword in a first domain-specific language (domain-specific language, DSL) and N translator generation rules, N is greater than or equal to 1, the description file is obtained through configuration, a first rule in the N rules includes a plurality of target character strings and at least one wildcard, and the first rule is any one of the N rules; and generating, based on the description file, a configuration file and a translator corresponding to the first DSL, where the configuration file includes the N rules.

It can be learned that, in this application, the description file is obtained through configuration by a user. The description file defines the keyword in the first DSL and the N translator generation rules, the first rule in the N rules includes the plurality of target character strings and the at least one wildcard, and the configuration file and the translator corresponding to the first DSL are generated based on the description file that is obtained through configuration. Compared with a method in which a description file is written by using a regular expression, a representation method of a description file in this application is simpler. The method is easy to operate, and a generated translator can meet a use requirement of the user.

Based on the first aspect, in a possible implementation, the generating, based on the description file, a configuration file and a translator corresponding to the first DSL includes: generating a fractal tree according to the N rules, where each of the N rules is a branch of the fractal tree, the at least one wildcard in the first rule is a virtual root node on a branch on which the first rule is located, and the virtual root node is different from a root node of the fractal tree; and generating the translator and the configuration file based on the fractal tree.

It can be learned that this application proposes a new fractal tree structure. The virtual root node is set in the fractal tree, so that the N rules in the description file can be constructed into one tree. When the translator is generated, only one tree needs to be traversed. In a conventional fractal tree structure, a plurality of trees are constructed according to N rules, and when a translator is generated, the plurality of trees need to be traversed. Compared with the foregoing method, the method in this application has low occupied time complexity and space complexity.

Based on the first aspect, in a possible implementation, the keyword includes one or more of a name of the description file, an import rule of the description file, a type of the translator, and a language used by the translator.

Based on the first aspect, in a possible implementation, the N rules include a recognition rule for a second DSL, and the method further includes: obtaining a to-be-translated text input by the user, where the to-be-translated text is written by using the first DSL or the second DSL; and translating the to-be-translated text into a corresponding syntax tree by using the translator.

It may be understood that the corresponding syntax tree may be obtained by inputting the to-be-translated text into the translator. In addition, when the N rules include the recognition rule for the second DSL, the generated translator may be used to translate the first DSL or the second DSL.

Based on the first aspect, in a possible implementation, the translating the to-be-translated text into a corresponding syntax tree by using the translator includes: inputting the configuration file into the translator; and translating the to-be-translated text into the corresponding syntax tree by using the translator.

It may be understood that after the to-be-translated text is input into the translator, the configuration file may be alternatively input into the translator, to obtain the corresponding syntax tree by using the translator.

Based on the first aspect, in a possible implementation, before the inputting the configuration file into the translator, the method further includes: updating the N rules in the configuration file to M rules, where at least one of the M rules does not belong to the N rules, or at least one of the N rules does not belong to the M rules.

It can be learned that the configuration file is used by the user to modify the N rules. That is, when using the translator, the user may modify a rule in the configuration file based on an actual requirement, and input a modified configuration file into the translator, and the translator translates the input to-be-translated text. The translator provided in this application can meet different requirements of different users, is easy to operate, and has strong applicability.

Based on the first aspect, in a possible implementation, the second DSL includes any one of a DBC description language, a CMake scripting language, and a GCOV description language.

According to a second aspect, this application provides a translator generation apparatus, including:
an obtaining module, configured to obtain a description file, where the description file defines a keyword in a first DSL and N translator generation rules, N is greater than or equal to 1, the description file is obtained through configuration, a first rule in the N rules includes a plurality of target character strings and at least one wildcard, and the first rule is any one of the N rules; and
a generation module, configured to generate, based on the description file, a configuration file and a translator corresponding to the first DSL, where the configuration file includes the N rules.

Based on the second aspect, in a possible implementation, the generation module is configured to: generate a fractal tree according to the N rules, where each of the N rules is a branch of the fractal tree, the at least one wildcard in the first rule is a virtual root node on a branch on which the first rule is located, and the virtual root node is different from a root node of the fractal tree; and generate the translator and the configuration file based on the fractal tree.

Based on the second aspect, in a possible implementation, the keyword includes one or more of a name of the description file, an import rule of the description file, a type of the translator, and a language used by the translator.

Based on the second aspect, in a possible implementation, the N rules include a recognition rule for a second DSL, and the apparatus further includes a translation module; the obtaining module is further configured to obtain a to-be-translated text input by a user, where the to-be-translated text is written by using the first DSL or the second DSL; and the translation module is configured to translate the to-be-translated text into a corresponding syntax tree by using the translator.

Based on the second aspect, in a possible implementation, the translation module is configured to: input the configuration file into the translator; and translate the to-be-translated text into the corresponding syntax tree by using the translator.

Based on the second aspect, in a possible implementation, the apparatus further includes an update module, configured to update the N rules in the configuration file to M rules, where at least one of the M rules does not belong to the N rules, or at least one of the N rules does not belong to the M rules.

Based on the second aspect, in a possible implementation, the second DSL includes any one of a DBC description language, a CMake scripting language, and a GCOV description language.

Functional modules in the second aspect are configured to implement the method described in the first aspect or any one of the possible implementations of the first aspect.

According to a third aspect, this application provides a translator generation device, including a processor and a memory, where the memory is configured to store instructions, and the processor is configured to execute the instructions stored in the memory, to perform the method according to the first aspect or any one of the possible implementations of the first aspect.

Based on the third aspect, in a possible implementation, the device is an in-vehicle computing platform or a server, and the server is a local server or a cloud server.

According to a fourth aspect, this application provides a storage medium, including program instructions, and when the program instructions are executed by a processor, the processor is caused to perform the method according to the first aspect or any one of the possible implementations of the first aspect.

According to a fifth aspect, this application provides a computer program product, including program instructions, and when the program instructions are executed by a processor, the processor is caused to perform the method according to the first aspect or any one of the possible implementations of the first aspect.

### BRIEF DESCRIPTION OF DRAWINGS

FIG. 1 is a schematic flowchart of a translator generation method according to this application;
FIG. 2 is an example of a syntax rule of a description file according to this application;
FIG. 3 is a partial schematic flowchart of a translator generation method according to this application;
FIG. 4 is a diagram of a structure of a fractal tree according to this application;
FIG. 5 is a diagram of an example according to this application;
FIG. 6 is a diagram of a structure of a translator generation apparatus according to this application; and
FIG. 7 is a diagram of a structure of a translator generation device according to this application.

### DESCRIPTION OF EMBODIMENTS

This application provides a translator generation method. Before the translator generation method provided in this application is described, an application scenario related to the method in this application is first described. The translator generation method provided in this application may be applied to the vehicle field, for example, applied to an in-vehicle computing platform. The in-vehicle computing platform generates a translator according to the method described in this application, and parses, by using a translator, a field language related to a controller local area network (controller area network, CAN) bus. The method may be further applied to other fields, for example, may be applied to fields such as natural language processing, an integrated development environment (integrated development environment, IDE), and information retrieval.

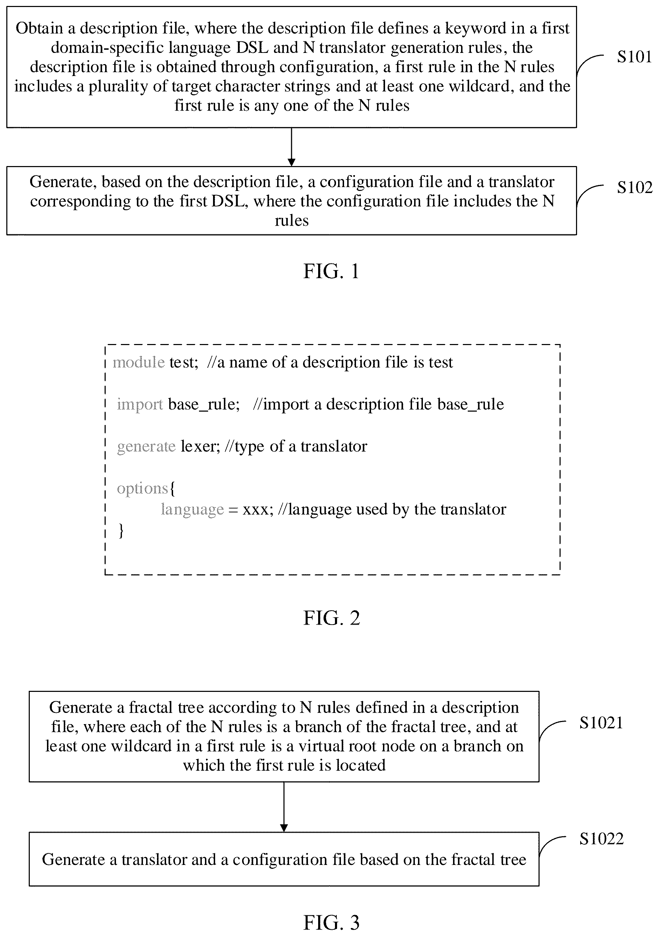

The method in this application may be performed by the in-vehicle computing platform, or may be performed by a server. The server may be a local server, for example, a local desktop computer, or may be a server located in a cloud, for example, a central server or an edge server. The cloud may be a public cloud, a private cloud, or a hybrid cloud. The following describes the translator generation method provided in this application. FIG. 1 is a schematic flowchart of the translator generation method according to this application. The method includes but is not limited to descriptions of the following content.

S101: Obtain a description file, where the description file defines a keyword in a first domain-specific language DSL and N translator generation rules, the description file is obtained through configuration, a first rule in the N rules includes a plurality of target character strings and at least one wildcard, and the first rule is any one of the N rules.

The first DSL is a language developed by a user. Optionally, in an implementation, the description file may alternatively use an existing DSL, that is, the first DSL may alternatively be an existing DSL.

The keyword (keyword), also referred to as a reserved word, in the first domain language is a word that is defined by a user and that has a special meaning, and is an identifier that has a special meaning in the first DSL.

The keyword may include one or more of a name of the description file, an import rule of the description file, a type of a translator, and a language used by the translator. For example, module may indicate the name of the description file, for example, module A indicates that the name of the description file is A; import indicates the import rule of the description file, for example, import B indicates that a description file B is imported; generate indicates the type of the generated translator, for example, generate lexer indicates that the type of the generated translator is a lexical analyzer, or generate parser indicates that the type of the generated translator is a syntax parser; and the language used by the translator is a programming language used when the translator is generated, and language may indicate the language used by the translator, for example, language = C++ indicates that the programming language used when the translator is generated is a C++ language, language = Java indicates that the programming language used when the translator is generated is a Java language, or language = Python indicates that the programming language used when the translator is generated is a Python language.

Optionally, the keyword may further include an optional configuration item, where the optional configuration item is an item that may be selectively configured by the user based on an actual requirement. For example, the optional configuration item may include the language used by the translator. For example, options may indicate the optional configuration item, and language in options may indicate the language used by the translator. Another keyword may be further defined in the optional configuration item. This is not limited in this application. The keyword in the first DSL may alternatively be another keyword. This is not limited in this application.

The N translator generation rules are defined based on a specific function of the to-be-generated translator, where N is an integer greater than or equal to 1. In an example, the to-be-generated translator needs to have functions of a lexical analyzer and a syntax parser. In this case, the N rules may include a lexical parsing rule and a syntax parsing rule. The lexical analyzer is used to perform word tokenization on an input character sequence, and the syntax parser is used to determine an association relationship between tokens based on a word tokenization result.

The first rule in the N rules includes the plurality of target character strings and the at least one wildcard, and the first rule is any one of the N rules. In other words, at least one of the N rules includes the plurality of target character strings and the at least one wildcard. A character string (character string, string (string) for short) is a string of characters including digits, letters, and underscores, and the character string is a data type indicating a text in a programming language. A wildcard is a special statement used to search for a file in a fuzzy manner. When searching for a target file, if the user does not know a true character of the target file or does not want to type a complete character, the user often uses a wildcard to replace one or more true characters.

In this application, two types of wildcards are defined in the description file, where one type of wildcard is "*", the wildcard * indicates any quantity of any characters, and the any quantity may be zero, one, or more. For example, a*b indicates a character string that starts with the character a, ends with the character b, and includes any quantity of any characters in the middle. The other type of wildcard is "?". The wildcard ? indicates any one character. For example, a?b indicates a character string that starts with the character a, ends with the character b, and includes any one character in the middle. It may be understood that, when the first rule includes one wildcard, the wildcard may be either of the two types of wildcards; or when the first rule includes a plurality of wildcards, the plurality of wildcards may be wildcards of a same type, for example, the plurality of wildcards included in the first rule may all be "*" or "?"; or the plurality of wildcards in the first rule may include both "*" and "?".

FIG. 2 is an example of a syntax rule of a description file according to this application. In FIG. 2, module, import, generate, options, and language are keywords defined in the description file, where module test indicates that a name of the description file is test, import base_rule indicates that a description file base_rule is imported to the description file test, generate lexer indicates that a type of a generated translator is a lexical analyzer lexer, options indicates an optional configuration item, and a language language used by the translator configured in options is xxx.

The description file is obtained through configuration by the user. The configuration includes the keyword and the N translator generation rules. It should be noted that the description file does not include logic code, where the logic code is code for performing a logical calculation operation, and the logic code includes, for example, code guided by statements such as if, else, and when.

S102: Generate, based on the description file, a configuration file and a translator corresponding to the first DSL, where the configuration file includes the N rules.

The configuration file and the translator corresponding to the first DSL are generated based on the keyword and the N translator generation rules that are defined in the description file, where the configuration file includes the N rules, and the N rules in the configuration file may be modified by the user. For example, when using the translator subsequently, the user may translate an input to-be-translated text according to the N rules, or may modify a rule in the configuration file, and translate an input to-be-translated text based on a modified rule.

The generated translator may be used to translate the first DSL. For example, a to-be-translated text is input into the translator, where the to-be-translated text is written by using the first DSL, and the translator may translate the to-be-translated text into a syntax tree corresponding to the first DSL. The generated syntax tree may be used for another application.

The generated translator may be further used to translate another language. In an implementation, the N rules in the description file further include a recognition rule for a second DSL. For example, if the generated translator has functions of a lexical analyzer and a syntax parser, the recognition rule for the second DSL includes a lexical parsing rule and a syntax parsing rule, and the generated translator may be further used to translate the second DSL. For example, a to-be-translated text written by using the second DSL is input into the generated translator, and the translator may translate the to-be-translated text into a syntax tree corresponding to the second DSL. The generated syntax tree may be used for another application.

In an implementation, after a to-be-translated text is input into the translator, the translator may directly translate the to-be-translated text into a corresponding syntax tree, where the to-be-translated text may be written based on the first DSL or the second DSL.

In another implementation, after a to-be-translated text is input into the translator, the configuration file may be alternatively input into the translator, and the translator translates the to-be-translated text into a corresponding syntax tree according to a rule in the configuration file, where the to-be-translated text may be written based on the first DSL or the second DSL.

Optionally, the N rules in the configuration file may be updated to M rules, which specifically includes any one or any combination of a plurality of the following: adding a new rule to the N rules; deleting at least one of the N rules; and modifying at least one of the N rules. That is, at least one of the M rules does not belong to the N rules, or at least one of the N rules does not belong to the M rules. In still another implementation, after the N rules in the configuration file are updated to the M rules, the configuration file is input into the translator, and the translator translates the to-be-translated text according to the updated rules, to obtain a corresponding syntax tree.

Optionally, the second DSL may be any one of a DBC description language, a CMake scripting language, and a GCOV description language. DBC is a database CAN, indicating a CAN packet database. Information related to CAN communication is defined in the DBC. The DBC description language is a language used to describe a CAN packet. CMake is a cross-platform installation (compilation) tool, and can describe installation (compilation) processes of all platforms by using simple statements. The simple statements are scripts. The CMake scripting language is a language used by the CMake script. For example, the CMake scripting language may be CMakeLists, CMakeCache, or the like. GCOV is short for GNU Coverage, indicating a GNU coverage report, where GNU is an open-source organization used to calculate code coverage. The code coverage (code coverage) is a measure in software testing, and describes a proportion and a degree of testing on source code in a program. The GCOV description language is a language used to describe code coverage. In this application, the second DSL may alternatively be another language. This is not limited in this application.

It can be learned that, in this application, the description file is obtained based on the configuration and does not include logic code. Compared with a method of indicating a description file by using a regular expression, a method for indicating the description file in this application is simpler. According to the method in this application, the translator and the configuration file are generated, where the configuration file may be used by the user to modify a rule. When a requirement of the user changes, the rule in the configuration file may be modified, then a modified configuration file may be input into the translator, and the translator translates a to-be-translated text. The highly applicable translator generated in the method in this application can meet different requirements of different users. When the translator generated in the method in this application translates the to-be-translated text, the to-be-translated text is directly input into the translator for translation. In this way, an operation is simple, and the translator is easy to use. The translator generated in this application can support translation in a plurality of languages.

In an implementation, that the configuration file and the translator corresponding to the first DSL are generated based on the description file may be implemented by using a fractal tree. FIG. 3 is a partial schematic flowchart of the translator generation method according to this application. The method includes but is not limited to descriptions of the following content.

S1021: Generate a fractal tree according to the N rules defined in the description file, where each of the N rules is a branch of the fractal tree, and the at least one wildcard in the first rule is a virtual root node on a branch on which the first rule is located.

Each of the N rules is a branch of the fractal tree. Therefore, the fractal tree includes N branches in total. A quantity of virtual root nodes on the branch on which the first rule is located is the same as a quantity of wildcards included in the first rule. For example, if the first rule includes one wildcard, there is one virtual root node on the branch on which the first rule is located. If the first rule includes two wildcards, there are two virtual root nodes on the branch on which the first rule is located.

The virtual root node is different from a root node. The root node is a node on which a root part of the entire fractal tree is located, and the entire fractal tree includes only one root node. The virtual root node is a root node of a branch formed by a target character string after the wildcard. One branch may include zero or one or more virtual root nodes, and the entire fractal tree may include one or more virtual root nodes.

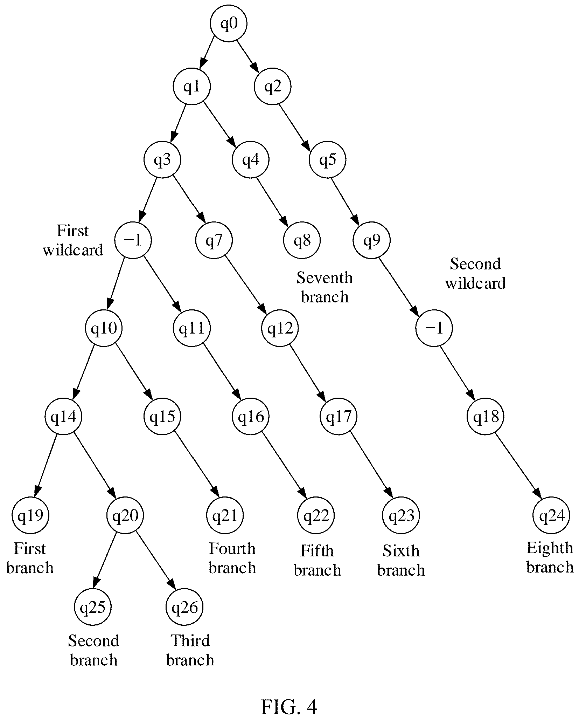

FIG. 4 is a diagram of a structure of a fractal tree according to this application. In the fractal tree shown in FIG. 4, q0 is a root node of the fractal tree, and content on the root node may be one or more target character strings, or may be a null character. For ease of representation, "-1" indicates a virtual root node, and content on the virtual root node is a wildcard. Content on a node other than the root node and the virtual root node may be one or more target character strings, or may be a null character.

The fractal tree shown in FIG. 4 includes eight branches, and each branch corresponds to one rule. For example, a first branch corresponds to a rule "q0q1qg3first wildcardq10q14q19", where a wildcard on the first branch is referred to as the first wildcard, and the first wildcard may be "*" or "?". For another example, a second branch corresponds to a rule "q0q1q3first wildcardq10q14q20q25", a third branch corresponds to a rule "q0q1q3first wildcardq10q14q20q26", a fourth branch corresponds to a rule "q0q1q3first wildcardq10q15q21", a fifth branch corresponds to a rule "q0q1q3first wildcardq11q16q22", a sixth branch corresponds to a rule "q0qlq3q7q12q17q23", a seventh branch corresponds to a rule "q0q1q4q8", and an eighth branch corresponds to a rule "q0q2q5q9second wildcardq18q24", where a wildcard on the eighth branch is referred to as the second wildcard, and the second wildcard may be "*" or "?". Herein, for ease of understanding, the wildcard on the first branch (the first wildcard) and the wildcard on the eighth branch (the second wildcard) are distinguished by using first and second. In practice, the first wildcard and the second wildcard may be the same or different.

In the diagram in FIG. 4, the first branch, the second branch, the third branch, the fourth branch, the fifth branch, and the eighth branch each include only one wildcard, and the sixth branch and the seventh branch do not include a wildcard. In practice, each branch of the fractal tree may include more or fewer wildcards, that is, each branch may include more or fewer virtual root nodes. The diagram in FIG. 4 is merely used as an example, and does not constitute a limitation on this application.

It may be understood that the virtual root node is a root node of a branch formed by the target character string after the wildcard. In the diagram in FIG. 4, the virtual root node in which the first wildcard is located is a root node of a branch "first wildcardq10q14q19", is also a root node of a branch "first wildcardq10q14q20q25", is also a root node of a branch "first wildcardq10q14q20q26", is also a root node of a branch "first wildcardq10q15q21", and is also a root node of a branch "first wildcardq11q16q22". The virtual root node in which the second wildcard is located is a root node of a branch "second wildcardq18q24".

S1022: Generate the translator and the configuration file based on the fractal tree.

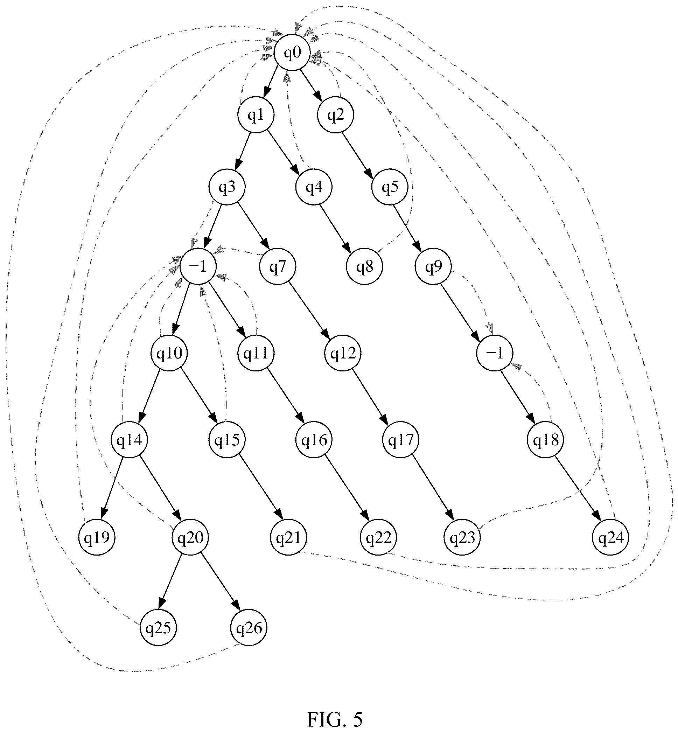

An AC automaton can be constructed based on the fractal tree, and the translator and the configuration file are generated based on the AC automaton. When the AC automaton is constructed, a fail pointer needs to be set. In the fractal tree provided in this application, the fail pointer may point to a root node, or may point to a virtual root node. In practice, a pointing direction of the fail pointer may be specifically set based on a specific situation. For ease of understanding, refer to FIG. 5. FIG. 5 is a diagram of an example according to this application. In FIG. 5, a fail pointer on which a part of nodes are set returns to a root node, and a fail pointer on which a part of nodes are set returns to a virtual root node. FIG. 5 is merely an example, and does not constitute any limitation on this application. In practice, a node to which the fail pointer returns may be specifically set based on a specific situation.

It can be learned that this application provides a structure of a new fractal tree, and a virtual root node is set in the fractal tree. The N rules in the description file are constructed on one tree by setting the virtual root node. When the translator is generated, the fractal tree needs to be traversed only once. Compared with a method using a conventional fractal tree structure in which N rules are constructed on a plurality of trees and the plurality of trees are traversed when a translator is generated, the method in this application has a lightweight feature in a time dimension and a space dimension.

The foregoing describes in detail the method in embodiments of this application. The following provides an apparatus in embodiments of this application.

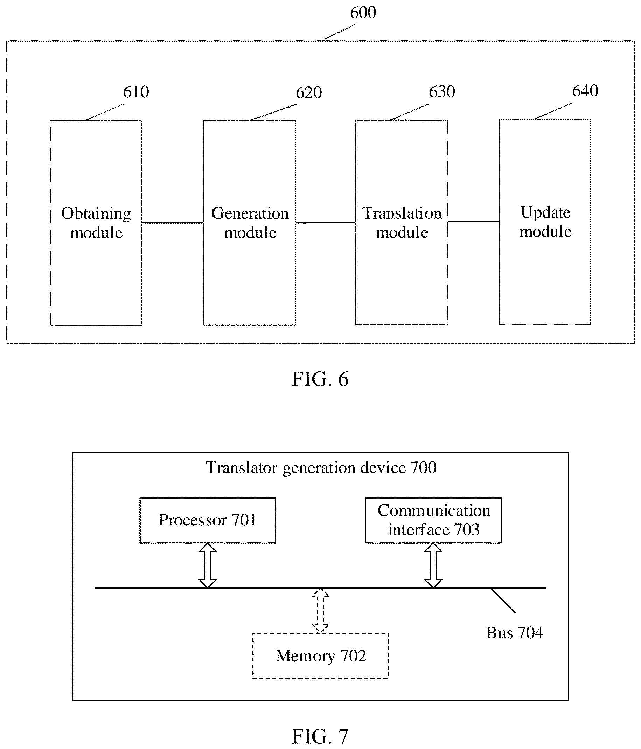

FIG. 6 is a diagram of a structure of a translator generation apparatus 600 according to this application. The apparatus 600 may be configured as an in-vehicle computing platform, or may be configured as a local server like a desktop computer, or may be configured as a cloud server like a central server or an edge server, or may be configured as a virtual machine or a container. The apparatus 600 includes:
an obtaining module 610, configured to obtain a description file, where the description file defines a keyword in a first DSL and N translator generation rules, N is greater than or equal to 1, the description file is obtained through configuration, a first rule in the N rules includes a plurality of target character strings and at least one wildcard, and the first rule is any one of the N rules; and
a generation module 620, configured to generate, based on the description file, a configuration file and a translator corresponding to the first DSL, where the configuration file includes the N rules.

In a possible implementation, the generation module 620 is configured to: generate a fractal tree according to the N rules, where each of the N rules is a branch of the fractal tree, at least one wildcard in the first rule is a virtual root node on a branch on which the first rule is located, and the virtual root node is different from a root node of the fractal tree; and generate the translator and the configuration file based on the fractal tree.

In a possible implementation, the keyword includes one or more of a name of the description file, an import rule of the description file, a type of the translator, and a language used by the translator.

In a possible implementation, the N rules include a recognition rule for the second DSL, and the obtaining module 620 is further configured to obtain a to-be-translated text input by a user, where the to-be-translated text is written by using the first DSL or the second DSL; and the apparatus 600 further includes a translation module 630, configured to translate the to-be-translated text into a corresponding syntax tree by using the translator.

In a possible implementation, the translation module 630 is further configured to: input the configuration file into the translator; and translate the to-be-translated text into the corresponding syntax tree by using the translator.

In a possible implementation, the apparatus 600 further includes an update module 640, configured to update the N rules in the configuration file to M rules, where at least one of the M rules does not belong to the N rules.

In a possible implementation, the second DSL includes any one of a DBC description language, a CMake scripting language, and a GCOV description language.

The functional modules in FIG. 6 are configured to implement the method in the method embodiments in FIG. 1 to FIG. 5. For details, refer to the description of specific content of the method embodiments in FIG. 1 to FIG. 5. For brevity of the specification, details are not described herein again.

It may be understood that division of the functional modules in FIG. 6 and corresponding steps performed by the functional modules are merely examples. In another embodiment, the apparatus 600 may be further divided into more or fewer functional modules based on specific execution steps.

FIG. 7 is a diagram of a structure of a translator generation device 700 according to an embodiment of this application. The translator generation device 700 may be an in-vehicle computing platform, or may be a local server or a cloud server, for example, a desktop computer, an edge server, or a central server, or may be a virtual machine or a container.

The translator generation device 700 includes at least one processor 701 and a communication interface 703, and optionally, further includes a memory 702. The processor 701, the memory 702, and the communication interface 703 are connected to each other through a bus 704.

The memory 702 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 702 is configured to store a related computer program and data. The communication interface 703 is configured to receive and send data.

The processor 701 in the translator generation device 700 is configured to read computer program code stored in the memory 702 to perform the following operations:
obtaining a description file, where the description file defines a keyword in a first DSL and N translator generation rules, N is greater than or equal to 1, the description file is obtained through configuration, a first rule in the N rules includes a plurality of target character strings and at least one wildcard, and the first rule is any one of the N rules; and generating, based on the description file, a configuration file and a translator corresponding to the first DSL, where the configuration file includes the N rules.

In a possible implementation, the generating, based on the description file, a configuration file and a translator corresponding to the first DSL includes: generating a fractal tree according to the N rules, where each of the N rules is a branch of the fractal tree, at least one wildcard in the first rule is a virtual root node on a branch on which the first rule is located, and the virtual root node is different from a root node of the fractal tree; and generating the translator and the configuration file based on the fractal tree.

In a possible implementation, the N rules include a recognition rule for a second DSL, and the method further includes: obtaining a to-be-translated text input by a user, where the to-be-translated text is written by using the first DSL or the second DSL; and translating the to-be-translated text into a corresponding syntax tree by using the translator.

In a possible implementation, the translating the to-be-translated text into a corresponding syntax tree by using the translator includes: inputting the configuration file into the translator; and translating the to-be-translated text into the corresponding syntax tree by using the translator.

In a possible implementation, before the inputting the configuration file into the translator, the method further includes: updating the N rules in the configuration file to M rules, where at least one of the M rules does not belong to the N rules, or at least one of the N rules does not belong to the M rules.

In a possible implementation, the second DSL includes any one of a DBC description language, a CMake scripting language, and a GCOV description language.

For implementation and beneficial effects of each operation, refer to corresponding descriptions of the method embodiments in FIG. 1 to FIG. 5.

It may be understood that, the processor 701 in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like. When the processor 701 is a CPU, the CPU may be a single-core CPU, or may be a multi-core CPU.

This application further provides a storage medium, including program instructions. When the program instructions are executed by a processor, the processor is caused to perform the foregoing translator generation method.

This application further provides a computer program product. The computer program product may be software or a program product that includes instructions and that can run on a computing device or is stored in any available medium. When the computer program product runs on a processor, the processor is caused to perform the foregoing translator generation method.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

## Claims

1. A translator generation method, comprising:
obtaining a description file, wherein the description file defines a keyword in a first domain-specific language DSL and N translator generation rules, N is greater than or equal to 1, the description file is obtained through configuration, a first rule in the N rules comprises a plurality of target character strings and at least one wildcard, and the first rule is any one of the N rules; and
generating, based on the description file, a configuration file and a translator corresponding to the first DSL, wherein the configuration file comprises the N rules.

2. The method according to claim 1, wherein the generating, based on the description file, a configuration file and a translator corresponding to the first domain-specific language DSL comprises:
generating a fractal tree according to the N rules, wherein each of the N rules is a branch of the fractal tree, the at least one wildcard in the first rule is a virtual root node on a branch on which the first rule is located, and the virtual root node is different from a root node of the fractal tree; and
generating the translator and the configuration file based on the fractal tree.

3. The method according to claim 1 or 2, wherein the keyword comprises one or more of a name of the description file, an import rule of the description file, a type of the translator, and a language used by the translator.

4. The method according to any one of claims 1 to 3, wherein the N rules comprise a recognition rule for a second DSL, and the method further comprises:
obtaining a to-be-translated text input by a user, wherein the to-be-translated text is written by using the first DSL or the second DSL; and
translating the to-be-translated text into a corresponding syntax tree by using the translator.

5. The method according to claim 4, wherein the translating the to-be-translated text into a corresponding syntax tree by using the translator comprises:
inputting the configuration file into the translator; and
translating the to-be-translated text into the corresponding syntax tree by using the translator.

6. The method according to claim 5, wherein before the inputting the configuration file into the translator, the method further comprises:
updating the N rules in the configuration file to M rules, wherein at least one of the M rules does not belong to the N rules, or at least one of the N rules does not belong to the M rules.

7. The method according to any one of claims 4 to 6, wherein the second DSL comprises any one of a DBC description language, a CMake scripting language, and a GCOV description language.

8. A translator generation apparatus, comprising:
an obtaining module, configured to obtain a description file, wherein the description file defines a keyword in a first domain-specific language DSL and N translator generation rules, N is greater than or equal to 1, the description file is obtained through configuration, a first rule in the N rules comprises a plurality of target character strings and at least one wildcard, and the first rule is any one of the N rules; and
a generation module, configured to generate, based on the description file, a configuration file and a translator corresponding to the first DSL, wherein the configuration file comprises the N rules.

9. The apparatus according to claim 8, wherein the generation module is configured to:
generate a fractal tree according to the N rules, wherein each of the N rules is a branch of the fractal tree, the at least one wildcard in the first rule is a virtual root node on a branch on which the first rule is located, and the virtual root node is different from a root node of the fractal tree; and
generate the translator and the configuration file based on the fractal tree.

10. The apparatus according to claim 8 or 9, wherein the keyword comprises one or more of a name of the description file, an import rule of the description file, a type of the translator, and a language used by the translator.

11. The apparatus according to any one of claims 8 to 10, wherein the N rules comprise a recognition rule for a second DSL, and the apparatus further comprises a translation module;
the obtaining module is further configured to obtain a to-be-translated text input by a user, wherein the to-be-translated text is written by using the first DSL or the second DSL; and
the translation module is configured to translate the to-be-translated text into a corresponding syntax tree by using the translator.

12. The apparatus according to claim 11, wherein the translation module is specifically configured to:
input the configuration file into the translator; and
translate the to-be-translated text into the corresponding syntax tree by using the translator.

13. The apparatus according to claim 12, wherein the apparatus further comprises:
an update module, configured to update the N rules in the configuration file to M rules, wherein at least one of the M rules does not belong to the N rules, or at least one of the N rules does not belong to the M rules.

14. The apparatus according to any one of claims 11 to 13, wherein the second DSL comprises any one of a DBC description language, a CMake scripting language, and a GCOV description language.

15. A translator generation device, comprising a processor and a memory, wherein the memory is configured to store instructions, and the processor is configured to execute the instructions stored in the memory, to perform the method according to any one of claims 1 to 7.

16. The device according to claim 15, wherein the device is an in-vehicle computing platform or a server.

17. A storage medium, comprising program instructions, wherein when the program instructions are executed by a processor, the processor is caused to perform the method according to any one of claims 1 to 7.
